# EUROPEAN PATENT SPECIFICATION

(11) **EP 2 289 135 B1**
(45) Date of publication and mention of the grant of the patent: **25.10.2017**
(21) Application number: 09762147.8
(22) Date of filing: 10.06.2009
(51) Int. Cl.: H02G 1/12

(54) **MACHINE AND METHOD FOR AUTOMATED DETECTION OF CABLES, WIRES AND PROFILES IN OR ON CABLE PROCESSING MACHINES**
VORRICHTUNG UND VERFAHREN ZUR AUTOMATISIERTEN ERKENNUNG VON KABELN, DRÄHTEN UND PROFILEN IN ODER AN KABELBEARBEITUNGSMASCHINEN
MACHINE ET PROCEDE POUR LA DETECTION AUTOMATIQUE DE CABLES, FILS ET PROFILES DANS OU SUR DES MACHINES DE TRAITEMENT DE CABLES

(30) Priority: 13.06.2008 CH 904082008; 14.06.2008 US 61598 P
(43) Date of publication of application: 02.03.2011
(73) Proprietor: Schleuniger Holding AG, 3608 Thun (CH)
(72) Inventor: Jost, Michael, 3600 Thun (CH); Rohrbach, Jörn, 3627 Heimberg (CH); Heiniger, Christoph, 3053 Münchenbuchsee (CH)
(74) Representative: Patentbüro Paul Rosenich AG
(86) International application number: PCT/IB2009/052474
(87) International publication number: WO 2009/150620

(56) References cited:
- WO-A-98/08283
- DE-A1- 4 413 577

## Description

Machine and method for automated detection of cables, wires and profiles in or on cable processing machines.

The invention relates to a machine and a method for a processing machine for longitudinal objects, in particular for cables and wires, which permits the reliable identification of a cable, wire or profile material inserted into the processing machine. The machine or the method determines the coordinated processing parameters in an automatic or automated manner on the basis of the identification of the cable, of the wire or of the profile material. The processing parameters thus determined can subsequently be used without problems and as known per se for the automatic or automated actuation of the processing machine for processing the inserted cables, wires or profile materials.

### Prior art

There are machines which short-circuit the inner conductor and the processing tools for the purpose of determining contact between the processing knife and the inner conductor. The patent JP6253430 describes such a machine. This machine is intended to prevent the insulation stripping knives from being damaged during the insulation stripping process by excessive contact with the inner conductor.

EP1772701 and EP1901026 describe a machine which determines the inner conductor diameter via the contact by one or both knife edges. The machine has a signal input device and a signal output device at another point. As a result of the contact, the output signal changes abruptly. The location at which the two knives are present at the time of contact of the inner conductor with one or both knife edges is determined by observation of the knife feed members and used directly for determining the conductor diameter.

JP7227022 describes a machine which likewise detects the contact of the inner conductor with a tool. Here, it is not the inner conductor that is short-circuited via a tool but, similarly to EP1772701 and EP1901026, the change in a signal is measured.

JP11299036 describes a machine which likewise detects the contact of the inner conductor with a tool. Here, a force is reportedly induced by an electric motor in the helically wound inner conductor. If the cutting edges touch the inner conductor, the induced current is conducted to earth, i.e. via a short-circuit, which is detected by an evaluation unit.

In the case of the machines according to JP6253430, EP1772701, EP1901026, JP7227022 and JP11299036, touching of the inner conductor or the first conducting layer by just one of the two cutting edges is sufficient to trigger the measuring pulse. However, even with symmetrical cables, it is frequently likely to be the case in practice that initially only one of the two cutting edges strikes the inner conductor or the first conducting layer, because the second cutting edge has not yet worked its way to the inner conductor or to the first conducting layer. Since a cable - in particular a thin cable - is often flexible, the cable can be brought slightly out of the central position on incision by the knife or by one of two knives or of a plurality of knives. It may subsequently frequently occur that an excessively large inner conductor diameter - but in any case an inexact inner conductor diameter - is "measured" or assumed. The calculated processing parameters are then in each case suboptimal. This disadvantageous effect is further reinforced by essentially reliable tolerances in the cable manufacture. The processing quality, measured on the finished cables, could therefore be correspondingly poor with these known systems.

JP9308038 describes another machine which likewise detects the contact of the inner conductor with a tool. The inner conductor or the first conducting layer closes an electrical circuit via an insulation stripping knife. Thus, this design, too, corresponds to the abovementioned short-circuit measuring principle. In order to avoid the abovementioned disadvantages, it would be possible, in contrast to the above machines, to attempt to trigger a measuring pulse in the case of such a machine according to JP9308038 only when both cutting edges rest on the conducting material. However, this requires mutual electrical insulation of the two cutting edges, which complicates the design of the cutting unit but avoids the abovementioned disadvantage.

In JP2000354315 and JP2002101514, the knife and a short small tube form one electrode each of a capacitor. The inner conductor is present topologically between the two electrodes. If the knife is now advanced, the capacitance value of the capacitor changes. This capacitance value is measured using evaluation electronics and the cable structure is derived therefrom. However, the knife is used as an electrode there. This may have disadvantages in that different knives have different properties. Moreover, the knife wear may influence the properties of the electrode. Furthermore, in the case of this design, no measurement of the external diameter of the cable is disclosed. This subject matter of JP2002101514 is evidently an extension of the subject matter of JP2000354315 by an inspection function (quality control).

Common to all machines to be found in the above documents from the prior art is that the control of the incision process takes place via the detection of the contact between the cutting edges and the inner conductor or via a type of distance measurement during each insulation stripping process of each individual finished cable.
Furthermore common to all machines to be found in the above documents is that the external diameter cannot be determined in combination with the inner conductor diameter in the case of any of the machines. Consequently, these known machines also cannot be used for the precise automatic or automated actuation of the processing machines mentioned at the outset.

Furthermore common to all machines to be found in the above documents is that only the diameter of the inner conductor or the diameter of the first conducting layer can be detected and is therefore the center of interest. The determination of processing parameters for the processing of cables having more than two layers is therefore not possible, which is disadvantageous.

Owing to the inertia of the knife feed mechanism, the knives of the known devices may "overshoot" (knives cut slightly into the inner conductor) after the contact with the inner conductor or the first conducting layer has been detected. The degree of this "overshooting" differs according to the cutting resistance. Composition of this effect is correspondingly difficult.

The effect of the "overshooting" can be alleviated by a slow cutting process. However, this has the disadvantage that the entire cutting process is correspondingly slowed down.

The overshooting disadvantageously entails the danger of damage to the conductor surface, which may result in the finished cable being unusable.

The overshooting additionally disadvantageously entails the danger of unnecessary wear of the processing knife owing to the unintentional incision and furthermore damage to the processing knife during the stripping of the insulation layer since, in the "overshot state", conductor material too may inevitably be scraped off.

If the above methods are used during each insulation stripping process, i.e. not merely during a pilot measurement, the incision and insulation stripping tools will have to be moved correspondingly slowly in practice during the incision.

The machine according to JP2000354315 and JP2002101514 is not dependent on the cutting edges touching the inner conductor or the first conducting layer. As far as these patent publications can be understood in the text of the English translation of the description, the position of the cutting edges is continuously monitored ("... continuously monitored based on the result of the comparison."). Monitoring is evidently effected by comparison with a set of threshold values ("... is compared with the threshold set in a microcomputer..."). How these threshold values reach the microcontroller is unclear. However, the person skilled in the art assumes from the available information on this prior art that this machine is limited to stripping the insulation from a certain cable type whose threshold values are known. In contrast, however, the object of the invention is to make it possible to determine a multiplicity of cables and automatically to establish the different processing parameters thereof.

It is moreover questionable for the person skilled in the art whether the continuous measurement of the capacitance permits reliable results at all. As the machine is described in the abstract of [0010] JP2000354315, the capacitance changes in the pF range, which can be reliably measured only by a very complicated measuring amplifier. Moreover, the cable insulation forms a dielectric which, in the case of the measuring setup described, appears to cast doubt on the possibility of sufficient repeatability of the capacitance measurement. The presence of a so-called "video amplifier", according to this prior art, indicates very high frequencies. This in turn is an indication that the measuring machine must be particularly complicated.

JP2002101514 appears to be an extension of JP2000354315. The two documents originate from the same applicant.

The machines according to JP2000354315 and JP2002101514 are therefore suitable as a whole as the closest prior art.

### Object of the invention

It is therefore the object of the invention to have the effects mentioned at the outset and to avoid the disadvantages stated in the prior art. In particular, it is an object of the invention to provide a machine which reliably detects both inner conductor and intermediate layers and especially the external diameter and takes them into account and automatically influences the control of the processing machine so that cables or longitudinal objects initially unknown to a user can also be correctly processed.

This object is achieved with a machine according to claim 1 and a method according to claim 14.

Further variants or developments of the invention are defined in the dependent claims.

In the case of the machine according to the invention, a fundamentally different approach is adopted compared with the prior art. Here, the cable to be processed is identified automatically or semiautomatically and reliably on the basis of certain measured properties (parameters) in comparison with existing parameters in a table memory. In the simplest case, an inner conductor cross-section which is typical of just this cable having this external diameter is assigned on the basis of the determination of the external diameter and the subsequent comparison with the available table values. Furthermore, the layer structure is evident from the now known external diameter and inner conductor cross-section via the comparison with the table values. For the cable thus identified, the processing parameters are then automatically taken from the table memory with software support. For the production of the finished cable, the same processing parameters are always used after identification of the relevant cable.

With the cable identification, the internal diameter of the cable, as it would normally have to be plus/minus tolerances, is assumed. A slightly asymmetrical inner conductor position is, according to the invention, unimportant for the measuring process. In the most frequent method of use of processing machines (continuous machines for endless cables) which employ the invention, the processing parameters are not read in for each new finished cable. It is as a rule even the case that no measurements at all are carried out before the next "load process". As long as no "load process" is carried out, it may be assumed that the same raw material is still present in the machine - this is a continuous machine in contrast to a stop machine (processing machine in which a cable is inserted from one side and pulled out again through the same side). In the case of stop machines having equipment according to the invention, the cable could be newly identified before each insulation stripping process and the processing parameters could be read in anew or the presence of the same cable roll material could be indicated by a separate user command.

The simplest design according to the invention thus manages with an external diameter sensor in combination with a table memory which comprises the defined internal cross-sectional values, layer structure information and processing parameters coordinated with the respective external diameters.

It is understandable that, with such a simple design, cables can be processed in a revolutionary way and the abovementioned disadvantages can be avoided. However, the simplest design according to the invention will rapidly approach its limits with increasing number of cables since there will then probably also be cables with the same external diameter but different internal diameter and possibly different layer structure. For this case, the further development of the invention envisages mounting a second sensor which delivers other measured values, on the basis of which cables having the same external diameter but different internal structure can indeed be reliably identified. Starting from the abovementioned simplest design according to the invention, it might also be possible to say that an increase according to the invention in the accuracy of measurement is achieved by a division of the sensor into two measuring sensors having different measuring properties.

Even with this improved design comprising two sensors, it is conceivable that - depending on the number of processable cables - limits will be encountered. In order to improve the situation then present, the invention proposes, according to a further development, using a third sensor, etc.

Since, however, limits may then theoretically also be encountered and, in the fine range, all sensors operate with inaccuracies of measurement, a further development of the invention envisages a semiautomatic procedure. This means that a selection of possible cables which are suitable as the closest cables on the basis of the measured parameters is indicated to the user on a display. It is then a matter for the operator to make the final decision about the cable present and to confirm it to the machine.

In this respect, the invention goes one step further and, in a further development, permits an autolearn effect or an auto-teach-in. This means that the machine learns step by step and notes the results.

In addition to the sensor for the measurement of the external diameter, electromagnetic ring sensors which, depending on the cable introduced, deliver a characteristic output signal can be used as a second sensor.

Such ready-to-use ring sensors (e.g. manufacturer: Turck GmbH, Mülheim a.d. Ruhr; e.g. Sensor Bi20R-Q14-LU) have been found to be suitable. Owing to the uniform magnetic field within the cylindrical measuring range, it is not necessary to lead the cable exactly centrally in order to obtain a precise measured value. The measured value (the evaluation electronics generates a voltage in the case of the sensor from Turck) corresponds to a certain inner conductor cross-section of a certain conductor material.
According to Turck, the principle of operation of their ring sensors is as follows: the inductive sensor detects metallic objects without contact and without wear. A high-frequency, electromagnetic alternating field which interacts with the object to be detected is used for this purpose. The object to be detected acts as a core.

In principle, it is also conceivable for the processing machine to be equipped only with one ring sensor and to be provided with no sensor for determining the external diameter.
In principle, it is also conceivable for the processing machine to be equipped with any other sensor or with any other sensors which output values which are characteristic for certain cables, wires or profile materials and are then processed via a comparison table in order finally to identify the cable, the wire or the profile.

With a fully automated determination of the insulation stripping parameters without any action by an operator, it may not be possible to achieve optimal working results. According to the invention, the processing parameters are therefore input beforehand by an experienced operator. For example, after incision, most cables require a slight withdrawal of the processing tools, a so-called wayback, in order to avoid scratches on the inner conductor or the screen braid. The determination of the magnitude of this wayback is expediently left to an experienced operator. The exact configuration of a processing process is effected as a rule through the production of a certain number of finished cables (samples).

If suboptimal working results are sufficient, the processing machine according to the invention can also be adjusted fully automatically. This can be effected, for example, by determining the processing parameters approximately in a comparative method (comparison of the measured values of the sensor or sensors with the cables deposited in the table, subsequent determination of the parameters, for example via interpolation or extrapolation). Thus, it is conceivable within the scope of the invention to deposit a technology database which contains processing parameters of a multiplicity of cables. With suitable algorithms, the processing parameters could then be generated fully automatically by interpolation and possibly also by extrapolation methods. This would then be a fully automated extension of the invention.

Experience shows that most cables are produced so as to be substantially dimensionally stable. The procedure according to the invention with preset processing parameters therefore ensures a constant processing quality and saves in particular the continuous measurement on the cable, since the latter can be immediately processed after its initial identification and the loading of the associated, previously stored processing parameters.

In the case of the machine according to the invention, the specific number of layers the individual cable has happily plays no role in the case of most cables. By identifying the cable through a significant measured value (or through a plurality of significant measured values), the complete cable parameters with all relevant data and the cable processing program with the complete parameter set are identified and loaded with the aid of the table memory. This process permits in particular the reliable identification and correct processing of cables having more than two layers.

The features of the solution which achieve the object thus have the following effects:
The setting up of cable processing machines, e.g. of Cut & Strip machines (e.g. for processing parameters such as incision depths, insulation stripping lengths, incision speeds, insulation stripping speeds, etc), is substantially facilitated and accelerated. Consequently, the changeover times which occur when changing from one cable to another are minimized.

Furthermore, the risk of inputting incorrect setup values is greatly reduced, which prevents premature wear of the processing tools (knives) and unnecessary damage to or consumption of cable material. Furthermore, the probability that correctly processed finished cables will result as the end product from the processing machine is greatly increased (quality aspect).

### Definitions (for better understanding of the following description of preferred working examples)

The reference numerals stated here relate directly to the figures and claims.

The following definitions correspond to the terminology used in the technical area. It is not a globally standardized terminology which is used as such by all cable-processing companies. However, the terminology corresponds to the Schleuniger-specific data maintenance structure and, in that Schleuniger is one of the world's leading manufacturers of cable processing machines, is known to the person skilled in the art.

### • Raw material

The raw material data precisely describe the cable raw material. The raw material is described by the totality of the raw material data (list not complete):
- External diameter
- Diameter of inner conductor
- Color of the insulation or of the sheath
- Etc

Data which describe the structure of the cable (flat cable, coaxial cable, multiconductor cable, ...) are furthermore included.

A raw material is identified by a raw material ID and if need be by a batch number and if need be by a date of manufacture. With the information on a cable roll (preferably the raw material ID, optionally batch number, optionally date of manufacture), the raw material can be exactly identified. The raw materials are stored in the program library "Raw material" 14.

### • Method

For the production of a finished cable, numerous setup values must be specified, especially for the transport and cutting units. The methods are in principle dependent on the raw material. In practice, however, a preferred method is assigned to a certain raw material.

The method is the totality of the method parameters (extract from list):
- Contact pressure of left transport unit 4 when feed runs
- Contact pressure of right transport unit 7 when feed runs
- Contact pressure of left transport unit 4 when beginning of cable is being processed (stripped of insulation)
- Opening of right transport unit 7 when beginning of cable is being processed (stripped of insulation)
- Contact pressure of right transport unit 7 when cable end is being processed (stripped of insulation)
- Opening of left transport unit 4 when cable end is being processed (stripped of insulation)
- Opening of left transport unit 4 when feed runs
- Opening of right transport unit 7 when feed runs
- Over-cut of knife 13 on cutting through
- Wayback of knife 13 when withdrawn
- Position of knife 13 when feed runs
- Position of knife 13 when knife change process is underway
- Etc

A method is identified by a method ID.

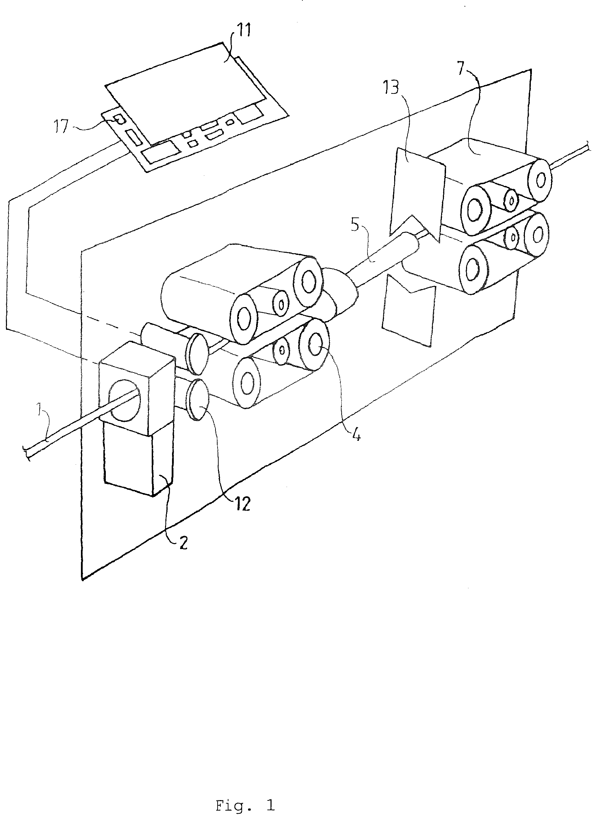

The methods are stored in the program library "Methods" 15. The methods are carried out on the cable 1 by the actuation according to the invention, by means of the processing tools 13 and the feed units 4, 7 and optionally also by a pivotable guide 5 and optionally also by further processing and guide units not shown in Fig.1.

### • Operation

The operation describes the effective form of the finished cable.

The operation is the totality of the operation parameters (list not complete):
- Cable length
- Incision positions
- Stripped lengths
- Etc

The operation is a part of the description of a finished cable.

### • Cable 1, finished cable 21

"Finished cable" designates the finished cable 21. Cable processors identify the finished cables according to the conventions of their identification or number system. As a rule, each finished cable receives an identifying article number.

In order to be able to produce a finished cable, the associated method and the associated operation must be known. The term "finished cable" was chosen here in order to distinguish a completely processed cable from its raw material, which is designated here for the sake of simplicity by the customary expression "cable". The expression "finished cable" expresses the fact that the cable in question is a completely processed cable which has undergone all processing steps in the processing machine.

### • Cable list 10

This is a list of a plurality (from one to several hundred) finished cables. In certain embodiments, the cable list 10 may also be regarded as a self-contained processing unit. Depending on the custom in processing, a cable list often corresponds to a certain order and is accordingly identified by an order number.

Thus, all cables required for the construction of a certain machine or of a certain switch cabinet can be stored in a certain cable list 10. According to a further development of the invention, another cable list may therefore be available - or optionally also be provided via external memory slots or the like - for another machine or another switch cabinet.

Often, cable lists are also used for identifying or at least differentiating a daily quota of finished cables to be produced.

Usually, the following parameters belong to each finished cable:
- Cable name or article number
- Name or ID of the method
- Operation parameters (cable length, incision sites, stripped lengths, ...)
- Etc

In a cable list, the number of finished cables to be produced is also associated with each finished cable.

### • Layer or cable layers (cable structure)

As a rule, each cable consists of a plurality of layers. A stranded cable consists of an insulation and an inner conductor - i.e. it has at least two layers. A simple coaxial cable consists of a cable sheath, a screen braid, a dielectric and an inner conductor - i.e. it has at least four layers. A simple multiconductor cable (e.g. three-pole network cable) has a cable sheath, a certain number of inner cables with in each case an insulation and in each case an inner conductor - i.e. the simple multiconductor cable has at least three layers.

### Description of the invention with reference to a working example of a cable processing machine

The drawing shows a working example of the invention:
Fig.1 shows a schematic diagram of a simple cable processing machine having only one pair of cable processing tools,

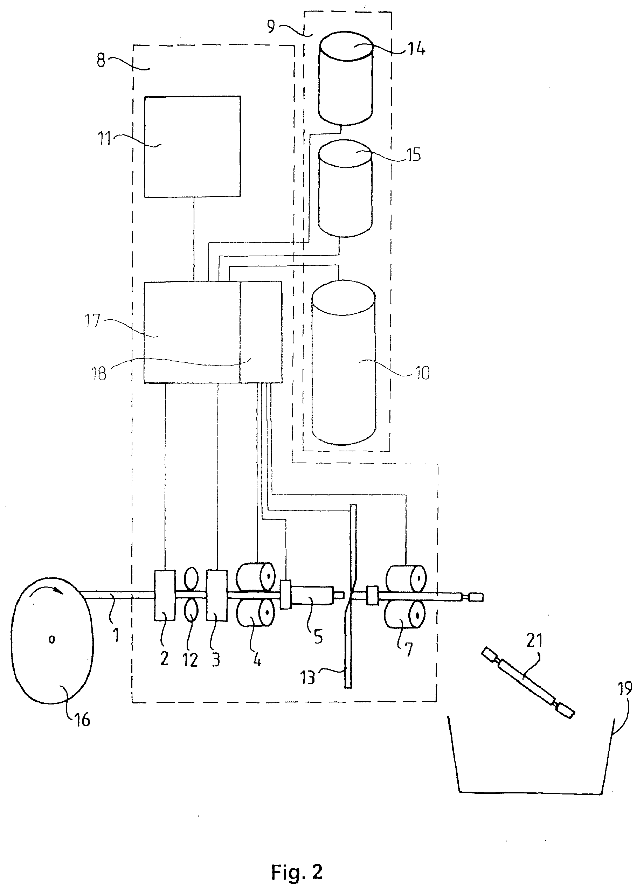

Fig.2 shows the same schematic structure but with a schematic diagram of the electronic hardware and software and

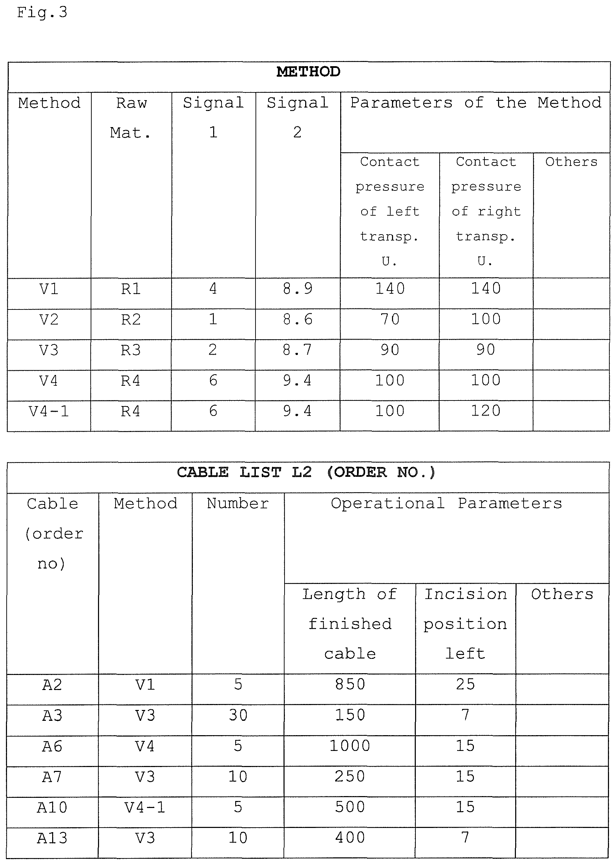

Fig.3 schematically shows a table with different processing methods and a cable list as might be used according to the invention.

The figures are described overall. Identical reference numerals denote identical components. The scope of protection of the patent claims is not limited simply to the working examples shown. Thus, cable processing machines having a plurality of pairs of tools or the like are also included.

With the non-contact sensor 2, an excitation signal is generated and is induced in the cable 1 to be processed. The signal response from the cable 1 generates a measuring signal which permits conclusions about the internal structure of the cable or of the wire or of a profile 1 at least partly comprising metal (referred to below as "cable"), which is to be processed by the cable processing machine. Sensor 2 is preferably, and according to a particular working example of the invention, an inductive ring sensor substantially comprising a transmitting/receiving coil and evaluation electronics.

According to a particular development of a working example, a ring sensor 2 available ready-for-use on the market (manufacturer: Turck GmbH, Mülheim a.d. Ruhr; e.g. Sensor Bi20R-Q14-LU) is used. Owing to the uniform magnetic field within the cylindrical measuring region, it is advantageously not necessary to guide the cable 1 exactly centrally in order to obtain a precise measured value. The measured value (in the case of the sensor from Turck, the evaluation electronics generates a voltage signal) corresponds to a certain total inner conductor cross-section (of one or more inner conductors) of a certain conductor material.

The principle of operation of this sensor 2 may be stated, for example, as follows: inductive sensors detect, without contact and without wear, all metallic objects which are held in their range of action. For this purpose, they use a high-frequency electromagnetic alternating field which interacts with the object to be detected. The object to be detected - in this case the inserted cable - acts as a core during the measurement.

In the case of cables, each cable 1 has a characteristic value which depends on the material of the inner conductor or conductors, on the cross-section of the inner conductor or conductors and on the remaining structure of the cable.

After a cable has been inserted into the cable processing machine, the sensor 2 generates a value characteristic for this cable in analog or digital form; in the case of the Turck sensor, it is an analog measured voltage. This value is now compared with the values stored in a cable library or table memory 9. 10 indicates an exemplary cable list (cable library) which was stored beforehand or was programmed by an operator on site.

According to a particular working example of the invention (semiautomatic sequence), the cable 1 or the cables which correspond to this value are shown on the display 5 to the operator. If only one cable 1 is shown, the operator can confirm the cable type and the cable processing machine loads the raw material and method data associated with the cable 1 from the table memory 9. In the case of a measured signal that cannot be unambiguously assigned to a single cable (raw material) (e.g. measured voltage = 5 V - cf. cable list 10), two or more cables are shown (e.g. raw materials R1 and R4). If a plurality of cables are shown, the operator can select and confirm the correct cable in the display on the basis of external features, such as color, external diameter, cable type (stranded cable, coaxial cable, etc). The cable processing machine then loads from its table memory 9 the complete raw material and cable data associated with the selected cable 1 and processing data (method data) or finished cable data, such as length, insulation stripping length, stepwise insulation stripping, etc.

In order to produce a certain finished cable from a possible group of different finished cables, a certain finished cable can be selected by the operator on the basis of, for example, the desired length. If need be, a new cable length can be manually input. In such a case, it is conceivable that the system may request a new identification of the finished cable.

In the present example, for example, three different raw materials (R1, R3 and R4) are shown in the cable list 10. Only one finished cable A2 corresponds to the raw material R1, and there is therefore only one set of processing data for this cable. The raw material R4 can, however, be processed with two different processing operations to give two different finished cables, A6 and A10. Accordingly, two sets of actuation data are available for this purpose as processing data V4 and V41. These are therefore also shown on the display 11 to the operator and proposed for selection. According to the invention, the operator can thus choose from the library or the table memory of the finished cables. Alternatively, it is also possible to provide methods in which all data are fetched exclusively automatically. However, this is possible only in the case of appropriate certainty of the raw material determination by the sensor or sensors and in the case of only a few different methods or finished cables.

By measurement with sensor 2, the choice of cables is in any case very greatly limited. The choice of the correct cable data or raw material data for the actuation is correspondingly easier.

If, according to a further particular development, the external diameter of the cable 1 is additionally measured with a sensor 12 in addition to the non-contact sensor 2, as a rule a single cable is now unerringly found in the case of automatic selection of the cables or raw materials from the table memory. The pair of values comprising inner conductor cross-section (measured with sensor 2) and external diameter (measured with sensor 3) is as a rule, as detailed investigations by the applicant have shown, descriptive of a certain cable, i.e. a specific cable can as a rule also be identified without problems from a larger group of cables.

In order to produce a finished cable, in this case too the loaded data must still be supplemented with the desired operational data (cable length, incision positions, stripping lengths, etc).

In a further particular development, it is also conceivable for only the sensor 12 to be present. Analogously to the embodiment described further above, a signal for comparison with the values in the table memory 9 is then available, which signal provides the external diameter of the cable or the thickness of the profile. In this simple variant of the invention, it is advantageous if the available cables relate only to a relatively small group of cables which are as different as possible.

The operator is considerably supported by the machine according to the invention. This is true particularly when it is frequently necessary to change over to another cable or raw material. However, this also applies when a large number of different cables is used for producing a very wide range of finished cables. The machine according to the invention supports the operator even in using the correct raw material in each case. This is also the case in particular because, for example, it is possible to show on the display if an incorrect raw material was inserted into the machine for a specified finished cable. This makes it possible to prevent wastage of material. It is also possible thereby to prevent premature wear of the processing tools 13 or damage to the cable 1 by unsuitable settings (e.g. insufficient wayback).

However, the machine according to the invention can also perform additional functions:
The inner conductor sensor or ring sensor 2 and the sensor for the external diameter of the cable or the scanning device 12 (if present) can, according to a further development of the invention, continuously provide measured values as soon as the cable, wire or profile 1 is introduced and is present in the processing machine. This has the advantage that, for example, a cable break or another irregularity on the cable 1 is immediately detected and the processing machine is immediately automatically stopped or an alarm can be triggered.

This design would thus dispense with an additional cable sensor (to date, for example, a measuring wheel as a cable break detector).

### Possible procedures or applications of the invention and methods

### • Procedure 1

The machine according to the invention permits the detection of the correct raw material and of the associated processing method or methods. A precondition is that the raw material is present with the characteristic data in the table memory 9 or in the database of the cable lists 10.

The operator thus clamps the raw material from which he tends to produce a certain number of finished cables. The system detects a certain raw material in the freshly clamped cable. In rare cases, it may be that the raw material cannot be unambiguously identified. A selection of possible raw materials is then indicated to the operator via the display. By comparison with the clamped cable and/or with the cable roll, he can in this rare case attempt to identify the raw material precisely and to confirm it. A selection of processing methods from the program library 15 for the raw material is then proposed to the operator. After selection of the desired method, a selection of finished cables suitable for the raw material and method is then displayed for the operator. He chooses a suitable finished cable and, after inputting the desired quantity, starts the production of the finished cable.

In an alternative case, a selection of finished cables suitable for the raw material is displayed directly for the operator after confirmation of the raw materials. He selects the suitable finished cable and, after inputting the desired quantity, starts the production of the finished cable.

In a further alternative case, on changing of the values stored beforehand, the operator inputs optionally a new cable length, optionally new stripping lengths, optionally other new operational parameters. In this case, the operator may be requested to specify the associated name of the new finished cable and/or the associated new article number. After inputting the requested data and inputting the desired quantity, the operator starts the cable production.

### • Procedure 2

On working through a cable list 10 or on working through simple cable production orders, the machine for automatic detection of a raw material serves primarily for quality assurance. The machine reliably prevents an incorrect raw material from being clamped in the cable processing machine. This prevents wastage of raw material. Furthermore, damage to the processing tools (knives) is prevented. The operator is requested via the display (warning) to check whether the correct knives have been clamped if the cable 1, the cable immediately before a newly clamped cable, had to be processed with different knives.

In cooperation with automatic detection of the knives by, for example, RFID, it is possible to ensure automatically that the knives (or other tools) used match the clamped cable 1. An RFID identification device cooperates with RFID identification marks on the knives and provides the information about the knives to the machine control.

### • Procedure 3

It is also conceivable that relations between the sensor measured values on the one hand and raw material and method on the other hand are stored in an additional technology database of the library or of the table memory 9 for typical cable topologies, such as "stranded cable" and "coaxial cable". After clamping a completely unknown raw material, data for the method which are required for processing the cable are calculated with the aid of the technology database. With the aid of a dialogue conducted between operator and processing machine (so-called wizard), the operator is requested to answer a few questions, which facilitates the finding of the correct raw material data and data of the method. For example, the operator should state whether a stranded cable or a coaxial cable is present.

### Exemplary use of the invention

### Case 1, use of a new raw material:

In a teach-in process, in the case of a simple stranded cable 1, a preferably experienced operator inputs, in a first step, the external diameter and the internal diameter of the conductor or alternatively the conductor cross-section of the conductor. On the basis of these data (cable type, external diameter, conductor diameter or conductor cross-section), the cable processing machine 8 calculates the suitable method. The cable 1 to be processed from the raw material R3 is loaded into the cable processing machine 8 in the second step. In a third step, a test cable is now produced. On the basis of this test cable, the parameters of the method are, if required, further adapted (fine tuning). If required, a further test cable is produced and the parameters of the method are adapted again. The cable 1 remains clamped in the processing machine. As soon as the test cable is satisfactory, a method ID (e.g. V3) is input in a fourth step. At this moment, the processing machine assigns the parameters of the method and the existing signal values of the sensor or sensors present to the method ID. As a rule, the operator will also input the associated raw material ID (e.g. R3). Only when the associated raw material ID is input is a system later able to identify the raw material on the basis of the sensor measured values. If required, the operator can also input the features associated with the raw material, such as external diameter (if sensor 12 is absent), inner conductor diameter or inner diameter cross-section, color, surface structure, etc. All data are stored in the table memory 9.

As an alternative to the automatic calculation of the parameters of the method by the processing machine 8, the operator can manually input all parameters of the method in a first step. The parameters of the method include (list not complete):
- feed data, i.e. feed speed, feed acceleration, contact pressure of the transport units on the cable, opening of the left and right transport units 4 and 7, etc.
- cutting data, i.e. knife type, assigned holder position on the knife beam (explanation: a knife head can hold a plurality of pairs of knives or tools, which in each case are arranged in different positions on the knife beam. By shifting the knife beam in the y-direction, the desired knife or tool is brought into the working position. In the case of a so-called knife change (shifting of the knife beam in the y-direction), the knife or the tool should be opened to such an extent that no collision occurs during shifting with the cable to be processed.), overlap of the cutting edges during incision, incision speed and acceleration, knife opening during the cable feed and during knife change, pause times after incision, etc.
- Recutting data, i.e. recutting length, cutting edge overlap, knife type used, holder position on the knife beam, blow-out option, etc (all values are cable end-specific in each case).
- Method options, i.e. presence of measuring wheel yes/no, measuring wheel correction, movement strategy of the knife and of the guides, such as "normal mode" or "short mode", etc.
- Settings of the optionally present rotational cutting unit, i.e. knife feed speed and acceleration, clamping jaw feed speed and acceleration, etc.
- Cable structure, layer settings, i.e. identification of the layer, assigned knife or tool, incision speed and acceleration, cutting up yes/no, activation of the rotational cutting unit yes/no, knife wayback during the insulation stripping movement, layer diameter, etc (a set of values is specified for each layer).
Steps 2 to 4 are identical to the steps described above.

As a further alternative, the operator can fetch an already known method from the library 15 in a first step and accept this method unchanged or modify it in individual parameters of the method. Steps 2 to 4 are identical to the steps described above.

With steps 1 to 4, an unambiguous relation between the raw material and the signal values of the sensor or sensors is established.

### Case 2, programming of a new finished cable:

Immediately after steps 1 to 4 according to case 1 have been carried out, the operator can, in a fifth step, input the cable length and, with support of the processing machine 8 on the display, e.g. by graphic input aids, the form of the cable ends for production of a finished cable 21. If required, the operator can now have a finished cable 21 produced as a trial. As soon as the result is satisfactory, a cable ID (e.g. article number A7) is input in a sixth step. At this moment, the processing machine assigns the operational parameters to the cable ID.

As an alternative to the supported generation of the operational parameters by the processing machine 8, the operator can manually input all operational parameters in a fifth step. Step 6 is identical to step 6 described above.

As a further alternative, the operator can call up an existing finished cable and then input a new length and/or, once again supported by the processing machine 8, e.g. by graphic input aids, input the form of new cable ends. If required, the operator can now have the new finished cable 21 produced. As soon as the result is satisfactory, a cable ID (e.g. the article number A3) is input. At this moment, the processing machine assigns the operational parameters to the cable ID.

The system is now subsequently capable of identifying the raw material on the basis of the sensor measured values and of proposing a finished cable or a whole series of finished cables.

### Case 3, production of one or more finished cables:

The machine according to the invention permits the detection of the specific raw material and of the associated method or methods. A precondition is that the raw material with the characteristic data is already present in the table memory 9 or in the database of the cable lists 10.
The operator thus clamps the raw material from which he intends to produce a certain number of finished cables 21. The system detects a certain raw material in the freshly clamped cable 1. In rare cases, it may occur that the raw material cannot be unambiguously identified. The operator then receives a selection of possible raw materials. By a comparison with the clamped cable 1 and/or with the cable roll 16, he should in this rare case attempt to identify the raw material precisely and to confirm it. A selection of methods from the program library 15 which are suitable for the raw material is then proposed to the operator. After selection of the desired method, a selection of the finished cables suitable for the raw material and method is displayed for the operator. He chooses the suitable finished cable and, after inputting the desired quantity starts the production of the finished cable.

In an alternative case, after confirmation of the raw material, a selection of finished cables suitable for the raw material is displayed directly for the operator. He chooses the suitable finished cable and, after inputting the desired quantity, starts the production of the finished cable.

### Case 4, working through a cable list, working through simple cable production orders:

When working through a cable list 10 or when working through simple cable production orders (the cable ID, the raw material and the quantity are known), the machine for automatic detection of a raw material serves primarily for quality assurance. The machine reliably prevents an incorrect raw material from being clamped in the cable processing machine. This prevents wastage of raw material. Furthermore, damage to the processing tools (knives) is prevented. For this purpose, the operator is requested (warning) to check whether the correct knives have been clamped, if the cable 1, the cable immediately before the newly clamped cable, had to be processed with different knives.

In cooperation with an automatic detection of the knives via, for example, RFID, it is possible to ascertain automatically that the knives (or other tools) used are suitable for the clamped cable 1.

The table memory 9 can be designed so that it contains only a single library or a single uniform table memory which holds the various data records in different ranges. There is always a strict separation between raw material, method and operation.

The raw material data 14, the method data 15 and the cable lists can in each case be installed individually either directly on the microprocessor-based control electronics 17 or on a computer assigned directly to the cable processing machine or on a central computer (server) within a network to which the processing machine belongs.

The invention is described with reference to a working example with a cable processing machine. However, this formulation also includes the processing or machining of wires and of profiles which either consist completely of metal or have at least a proportion of metal and are, for example, only coated or covered with a thin layer on the surface. On the other hand, the term includes cables, in particular complex cables, such as coaxial cables, sensor cables, multi-conductor cables, cables with special screens, low-loss cables, etc.

A particular development of the invention arises if a first and second sensor (2, 12) are provided and if the computer 17 and the control are programmed so that, in the library or in the table memory, they link the measured values of the two sensors so that, as a result of this linked information, in each case only a small selection of corresponding methods, raw materials and finished cables are displayed to the operator even in the case of a multiplicity of similar raw materials.

As a result of the two-fold information about the cable (both internal structure via the first sensor and external diameter via the second sensor), the probability that now only a single method and raw material and only a few finished cables match the two measured values is in fact very high. Accordingly, the operator need not make a final choice or makes only a greatly reduced final choice. Accordingly, the choice of the suitable cable parameters is substantially automated.

An even further development arises if a third sensor, sensor 3, or even more sensors are present. Each further sensor increases the probability that now only a single method and only a few finished cables match the measured values. Accordingly, the operator need not make a final choice or makes only a greatly reduced final choice.

According to a further development of the invention, it is envisaged that a tolerance range can be specified for each signal value of the sensor. This tolerance value serves for comparison of the measured sensor data with the entries in the database. If in fact the tolerance range approaches the value zero, there is a greater probability that the machine will report that there is no stored cable, wire or profile in the database or library or in the table memory 9 which fits the sensor value or the sensor values, although the cable, wire or the profile has actually been entered in the database. If, on the other hand, the tolerance range is chosen too large, the operator may frequently have to choose from a larger selection of finished cables, wires or profiles, since more correct choices will then be displayed than are actually present. Consequently, an operator should accordingly be more careful to avoid the risk of incorrect selection.

### List of reference numerals

- R: Raw material
- V: Method
- L: Cable list
- A: Cable (finished cable, end product)

- 1: Cables, wires or profiles (longitudinal object)
- 2: Ring sensor, non-contact sensor
- 3: Sensor for insulation depth
- 4: Left transport unit
- 5: Pivotable guide (swivel pipe)
- 6 7: Right transport unit
- 8: Cable processing machine
- 9: Databases, table memory, cable library (may be present physically on the cable processing machine 8 or outside, for example on a connected computer or a connected data network)
- 10: Cable list
- 11: Display
- 12: Sensor for external diameter
- 13: Knife head, processing tools, knives
- 14: Program library for raw material
- 15: Program library for methods
- 16: Cable roll
- 17: Computer
- 18: Power unit of the control
- 19: Finished cable trough
- 20 21: Finished cable

## Claims

1. Machine for automatic or automated detection of cables, wires and profiles (referred to below as "longitudinal object" (1)) in or on a processing machine for these longitudinal objects, these longitudinal objects being capable of being introduced along a feed path into the processing machine and being processed there, and the longitudinal axis of the longitudinal objects (1) in the processing state being approximately coaxial with the feed path, comprising a control, having a computer and a program, for setting the processing parameters of the processing members and any feed members for the processing machine, comprising an operator interface and comprising at least one sensor (2, 12) which, in the operating state, feeds or feed to the machine relevant measuring signals generated by the longitudinal objects (1), **characterized**
**in that** the control (17,9) comprises at least one table memory into which, before the processing of the longitudinal objects (1), the suitable processing parameter set can be input via the operator interface for each of the longitudinal objects (1), it being possible to assign to each of these processing parameter sets the discrete measuring signal belonging to a certain longitudinal object (1) or the discrete measuring signals of the sensor or the sensors (2, 12), which measuring signals belong to a certain longitudinal object (1),
and **in that** the control (17, 9) is suitable for subsequently transmitting to the processing and feed members, on the basis of the existing measuring signal or the existing measuring signals of the sensor or of the sensors (2, 12) and on the basis of the presence of a certain longitudinal object (1) in the processing machine, the processing parameters suitable for this longitudinal object (1).

2. Machine according to claims 1, **characterized in that** the sensor is in the form of a non-contact sensor (2) and is preferably equipped so that it is capable, by electrical (electrostatic, capacitive or inductive) magnetic or electromagnetic excitation signals, of generating a reproducible electrical measuring signal specific to the longitudinal object (12) and outputting said measuring signal as a measured value, on the basis of which the exact type of longitudinal object used in each case and hence the associated processing parameter set can be derived automatically or semiautomatically, the non-contact sensor (2) optionally being in the form of an inductive ring sensor.

3. Machine according to claim 1 or 2, **characterized in that** the sensor or a second sensor is in the form of a preferably tactile or optical diameter sensor (12) and outputs a reproducible electrical measuring signal specific to the longitudinal object (1) as a value for the external diameter, on the basis of which the exact type of longitudinal object used in each case and hence the associated processing parameter set can be derived automatically or semiautomatically.

4. Machine according to any of the preceding claims, **characterized in that** all processing members and the control are equipped so that they are suitable for processing multilayer, at least two-layer, longitudinal objects (1), and **in that** the sensor (2) is equipped so that, in the case of the objects (1) mentioned as well as in the case of uninsulated or coated wires or profiles, it can measure the metallic conductor cross-section or at least output a signal on the basis of which the control can derive the actual conductor cross-section.

5. Machine according to any of the preceding claims, **characterized in that** one of the sensors (2 or 12) comprises an optoelectronic imaging optical system which is capable of recording information, such as colors, codes or data, applied to the surface of a longitudinal object and transmits corresponding signals to the control (17, 9) for the purpose of assignment of the longitudinal object to a certain set of processing parameters.

6. Machine according to any of the preceding claims, **characterized in that** the table memory or the control and the computer are integrated in the processing machine, in an external computer, which is coordinated with the processing machine, or in a network to which the processing machine belongs, the processing machine and/or the table memory optionally comprising a pregenerated library in which certain processing parameter sets which belong to certain types of longitudinal objects (1) are stored.

7. Machine according to any of the preceding claims, **characterized in that** the control is equipped or programmed to compare the conductor diameter measured with the sensor (12) ("cable" is stated below instead of the longitudinal objects since the following claims relate mainly to those embodiments which are preferably used for cable processing) and/or the measuring signal measured with the sensor (2) with the values in the table memory or in the library and to load the corresponding processing parameter set or, if this is not unambiguously possible owing to a lack of possibility of coordinating the external cable diameter and/or the measuring signal of the sensor (2), to display the suitable processing parameter sets to an operator via the operator interface so that the operator can make the final choice (on the basis of external or internal features of the cable (1) which are known to him).

8. Machine according to any of the preceding claims, **characterized in that** at least two or more identical or different sensors (2, 12) are provided, which in each case can generate different measuring signals specific to the cable type, and **in that** the control is equipped or programmed to compare the measured different measuring signals specific to the cable type with the values in the table memory or in the library and to load the corresponding processing parameter set or, if this is still not unambiguously possible owing to a lack of a precise possibility for coordination, to display the suitable processing parameter sets to an operator via the operator interface so that the operator can make the final choice (on the basis of external or internal features of the cable (1) which are known to him).

9. Machine according to any of the preceding claims, **characterized in that** one of the sensors - optionally a third sensor - is provided as a wall thickness sensor which, in the case of actuation, measures the wall thickness of the insulation of the longitudinal object or of the cable (1).

10. Machine according to any of the preceding claims, **characterized in that** the tactile diameter sensor (12) has, for determining the external diameter of the longitudinal object or cable (1), two wheels or rolls which are opposite one another in pairs and, in the measuring state, are pressed onto the longitudinal object (1) and thereby measure their spacing from one another as a measure of the external diameter in a customary manner (via potentiometer, Hall sensors, ...), or **in that** the diameter sensor (12) comprises at least one CCD fork light barrier or at least one laser micrometer.

11. Machine according to any of the preceding claims, **characterized in that** the tolerance ranges of the sensor measured values are displayable and adjustable in order to decide whether a processing parameter set can be unambiguously coordinated with the measured signals or not.

12. Machine according to any of the preceding claims, **characterized in that** the program of the control comprises a mode which detects any failure to feed in the object (1) by at least one of the sensors in order to stop the processing machine.

13. Machine according to any of the preceding claims, **characterized in that** the program of the control or of the table memory and/or of the library and/or of the operator interface is programmed so that an operator can assign sensor values to a longitudinal object (1) via a menu-driven teach-in by loading the desired longitudinal object (1) into the processing machine in order to carry out test measurements and, if desired, subsequently inputting the required processing parameters, including feed parameters, and carrying out test processing operations.

14. A method for automatic or automated detection of cables, wires, and profiles (referred to below as "longitudinal material (1)") in or on cable processing machines, comprising steps of:
measuring with at least one sensor (2,12) relevant measuring signals generated by the longitudinal material; and **characterized by steps of**,
identifying the longitudinal material to be processed automatically or semiautomatically and reliably on the basis of certain measured properties or parameters in comparison with existing parameters in table memory;
determining the coordinated processing parameters in an automatic or automated manner on the basis of the identification of the longitudinal material (1); and,
transmitting to processing and feed members, on the basis of the existing measuring signal or the existing measuring signals of the sensor or of the sensors (2, 12) and on the basis of the presence of a certain longitudinal member (1) in the processing machine, the processing parameters suitable for this longitudinal member (1).

15. A method for automatic or automated detection of longitudinal material (1) in or on cable processing machines as claimed in claim 14, **further characterized by the step of:**
delivering other measured values with a second sensor on the basis of which cables having the same external diameter but different internal structure can be reliably identified.

## Patentansprüche

1. Maschine zur automatischen oder automatisierten Erkennung von Kabeln, Drähten und Profilen (im Folgenden als "längliches Objekt" (1) bezeichnet) in oder auf einer Verarbeitungsmaschine für diese länglichen Objekte, wobei diese länglichen Objekte entlang einem Zuführweg in die Verarbeitungsmaschine eingebracht und dort verarbeitet werden können und die Längsachse der länglichen Objekte (1) im Verarbeitungszustand ungefähr koaxial mit dem Zuführweg ist, wobei die Maschine eine Steuerung, die einen Computer und ein Programm aufweist, zum Einstellen der Verarbeitungsparameter der Verarbeitungselemente und jeglicher Zuführelemente für die Verarbeitungsmaschine umfasst und mindestens einen Sensor (2, 12) umfasst, der bzw. die im Betriebszustand relevante Messsignale, die von den länglichen Objekten (1) erzeugt werden, der Maschine zuführt bzw. zuführen, **dadurch gekennzeichnet,**
**dass** die Steuerung (17, 9) mindestens einen Tabellenspeicher umfasst, in den vor der Verarbeitung der länglichen Objekte (1) den geeigneten Verarbeitungsparametersatz mittels der Bedienoberfläche für jedes der länglichen Objekte (1) eingegeben werden kann, wobei es möglich ist, jedem dieser Verarbeitungsparametersätze das separate Messsignal, das zu einem bestimmten länglichen Objekt (1) gehört, oder die separaten Messsignale des Sensors oder der Sensoren (2, 12), wobei diese Messsignale zu einem bestimmten länglichen Objekt (1) gehören, zuzuordnen,
und **dass** die Steuerung (17, 9) zum anschließenden Übertragen der Verarbeitungsparameter, die für dieses längliche Objekt (1) geeignet sind, an die Verarbeitungs- und Zuführelemente auf der Basis des existierenden Messsignals oder der existierenden Messsignale des Sensors oder der Sensoren (2, 12) und auf der Basis des Vorliegens eines bestimmten länglichen Objekts (1) in der Verarbeitungsmaschine geeignet ist.

2. Maschine nach den Ansprüchen 1, **dadurch gekennzeichnet, dass** der Sensor in der Form eines berührungslosen Sensors (2) ist und vorzugsweise derart ausgerüstet ist, dass er durch elektrische (elektrostatische, kapazitive oder induktive) magnetische oder elektromagnetische Anregungssignale ein reproduzierbares elektrisches Messsignal, das für das längliche Objekt (12) spezifisch ist, erzeugen und das Messsignal als ein Messwert ausgeben kann, auf dessen Basis der exakte Typ des jeweils verwendeten länglichen Objekts und somit der dazugehörige Verarbeitungsparametersatz automatisch oder halbautomatisch abgeleitet werden können, wobei der berührungslose Sensor (2) gegebenenfalls in der Form eines induktiven Ringsensors ist.

3. Maschine nach Anspruch 1 oder 2, **dadurch gekennzeichnet, dass** der Sensor oder ein zweiter Sensor in der Form vorzugsweise eines Berührungs-oder optischen Durchmessersensors (12) ist und ein reproduzierbares elektrisches Messsignal, das für das längliche Objekt (1) spezifisch ist, als einen Wert für den Außendurchmesser ausgibt, auf dessen Basis der exakte Typ des jeweils verwendeten länglichen Objekts und somit der dazugehörige Verarbeitungsparametersatz automatisch oder halbautomatisch abgeleitet werden können.

4. Maschine nach einem der vorhergehenden Ansprüche, **dadurch gekennzeichnet, dass** alle Verarbeitungselemente und die Steuerung derart ausgerüstet sind, dass sie zum Verarbeiten von mehrschichtigen, mindestens zweischichtigen länglichen Objekten (1) geeignet sind und dass der Sensor (2) derart ausgerüstet ist, dass er im Fall der erwähnten Objekte (1) sowie im Fall von nicht isolierten oder ummantelten Drähten oder Profilen den Querschnitt des metallischen Leiters messen oder zumindest ein Signal ausgeben kann, auf dessen Basis die Steuerung den tatsächlichen Leiterquerschnitt ableiten kann.

5. Maschine nach einem der vorhergehenden Ansprüche, **dadurch gekennzeichnet, dass** einer der Sensoren (2 oder 12) ein optoelektronisches optisches Bildgebungssystem umfasst, das Informationen, wie Farben, Codes oder Daten, die auf die Oberfläche eines länglichen Objekts aufgebracht sind, aufzeichnen kann und entsprechende Signale an die Steuerung (17, 9) zum Zwecke der Zuordnung des länglichen Objekts zu einem bestimmten Satz von Verarbeitungsparametern überträgt.

6. Maschine nach einem der vorhergehenden Ansprüche, **dadurch gekennzeichnet, dass** der Tabellenspeicher oder die Steuerung und der Computer in die Verarbeitungsmaschine, in einen externen Computer, der mit der Verarbeitungsmaschine koordiniert ist, oder in ein Netzwerk, zu dem die Verarbeitungsmaschine gehört, integriert sind, wobei die Verarbeitungsmaschine und/oder der Tabellenspeicher gegebenenfalls eine vorerstellte Bibliothek umfasst, in der bestimmte Verarbeitungsparametersätze, die zu bestimmten Typen von länglichen Objekten (1) gehören, gespeichert sind.

7. Maschine nach einem der vorhergehenden Ansprüche, **dadurch gekennzeichnet, dass** die Steuerung dazu ausgerüstet oder programmiert ist, den mit dem Sensor (12) gemessenen Leiterdurchmesser (im Folgenden wird anstelle der länglichen Objekte "Kabel" angegeben, da die folgenden Ansprüche sich hauptsächlich auf jene Ausführungsformen beziehen, die vorzugsweise zur Kabelverarbeitung verwendet werden) und/oder das mit dem Sensor (2) gemessene Messsignal mit den Werten in dem Tabellenspeicher oder in der Bibliothek zu vergleichen und den entsprechenden Verarbeitungsparametersatz zu laden, oder, wenn dies aufgrund einer fehlenden Möglichkeit zum Koordinieren des externen Kabeldurchmessers und/oder des Messsignals des Sensors (2) nicht unzweideutig möglich ist, die geeigneten Verarbeitungsparametersätze einem Bediener mittels der Bedienoberfläche anzuzeigen, so dass der Bediener die endgültige Wahl (auf der Basis von externen oder internen Merkmalen des Kabels (1), die ihm bekannt sind) treffen kann.

8. Maschine nach einem der vorhergehenden Ansprüche, **dadurch gekennzeichnet, dass** mindestens zwei oder mehr identische oder unterschiedliche Sensoren (2, 12) vorgesehen sind, die jeweils unterschiedliche Messsignale, die für den Kabeltyp spezifisch sind, erzeugen können, und dass die Steuerung dazu ausgerüstet oder programmiert ist, die gemessenen unterschiedlichen Messsignale, die für den Kabeltyp spezifisch sind, mit den Werten in dem Tabellenspeicher oder in der Bibliothek zu vergleichen und den entsprechenden Verarbeitungsparametersatz zu laden, oder, wenn dies noch immer aufgrund einer fehlenden präzisen Möglichkeit zur Koordinierung nicht unzweideutig möglich ist, die geeigneten Verarbeitungsparametersätze einem Bediener mittels der Bedienoberfläche anzuzeigen, so dass der Bediener die endgültige Wahl (auf der Basis von externen oder internen Merkmalen des Kabels (1), die ihm bekannt sind) treffen kann.

9. Maschine nach einem der vorhergehenden Ansprüche, **dadurch gekennzeichnet, dass** einer der Sensoren - gegebenenfalls ein dritter Sensor - als ein Wanddickensensor vorgesehen ist, der im Fall einer Betätigung die Wanddicke der Isolierung des länglichen Objekts oder des Kabels (1) misst.

10. Maschine nach einem der vorhergehenden Ansprüche, **dadurch gekennzeichnet, dass** der Berührungsdurchmessersensor (12) zum Bestimmen des Außendurchmessers des länglichen Objekts oder Kabels (1) zwei Räder oder Rollen aufweist, die in Paaren einander gegenüberliegen und im Messzustand auf das längliche Objekt (1) gepresst werden und dadurch ihren Abstand voneinander als eine Messgröße des Außendurchmessers auf übliche Weise (mittels eines Potentiometers, Hall-Sensoren usw.) messen, oder dass der Durchmessersensor (12) mindestens eine CCD-Gabellichtschranke oder mindestens ein Lasermikrometer umfasst.

11. Maschine nach einem der vorhergehenden Ansprüche, **dadurch gekennzeichnet, dass** die Toleranzbereiche der Sensormesswerte anzeigbar und justierbar sind, um zu entscheiden, ob ein Verarbeitungsparametersatz unzweideutig mit den Messsignalen koordiniert werden kann oder nicht.

12. Maschine nach einem der vorhergehenden Ansprüche, **dadurch gekennzeichnet, dass** das Programm der Steuerung einen Modus umfasst, der jegliches Fehlschlagen des Zuführens des Objekts (1) durch mindestens einen der Sensoren erkennt, um die Verarbeitungsmaschine zu stoppen.

13. Maschine nach einem der vorhergehenden Ansprüche, **dadurch gekennzeichnet, dass** das Programm der Steuerung oder des Tabellenspeichers und/oder der Bibliothek und/oder der Bedienoberfläche derart programmiert ist, dass ein Bediener Sensorwerte einem länglichen Objekt (1) mittels eines menübetriebenen Teach-ins durch Laden des gewünschten länglichen Objekts (1) in die Verarbeitungsmaschine, um Testmessungen durchzuführen und auf Wunsch anschließend Eingeben der erforderlichen Verarbeitungsparameter, einschließlich Zuführparameter, und Durchführen von Testverarbeitungsvorgängen zuordnen kann.

14. Verfahren zur automatischen oder automatisierten Erkennung von Kabeln, Drähten und Profilen (im Folgenden als "längliches Material" (1) bezeichnet) in oder auf Kabelverarbeitungsmaschinen, wobei das Verfahren die folgenden Schritte umfasst:
Messen von relevanten Messsignalen, die von dem länglichen Material erzeugt werden, mit mindestens einem Sensor (2, 12);
und **gekennzeichnet durch** die folgenden Schritte:
automatisches oder halbautomatisches und auf der Basis bestimmter gemessener Eigenschaften oder Parameter im Vergleich zu existierenden Parametern in einem Tabellenspeicher zuverlässiges Identifizieren des zu verarbeitenden länglichen Materials;
Bestimmen der koordinierten Verarbeitungsparameter auf automatische oder automatisierte Weise auf der Basis der Identifizierung des länglichen Materials (1) und
Übertragen an Verarbeitungselemente und Zuführelemente auf der Basis des existierenden Messsignals oder der existierenden Messsignale des Sensors oder der Sensoren (2, 12) und auf der Basis des Vorliegens eines bestimmten länglichen Elements (1) in der Verarbeitungsmaschine, wobei die Verarbeitungsparameter für dieses längliche Element (1) geeignet sind.

15. Verfahren zur automatischen oder automatisierten Erkennung von länglichem Material (1) in oder auf Kabelverarbeitungsmaschinen nach Anspruch 14, weiterhin **gekennzeichnet durch** den folgenden Schritt:
Liefern anderer Messwerte mit einem zweiten Sensor, auf deren Basis Kabel mit demselben Außendurchmesser, jedoch unterschiedlicher Innenstruktur zuverlässig identifiziert werden können.

## Revendications

1. Machine pour la détection automatique ou automatisée de câbles, de fils et de profilés (ci-après appelés « objets longitudinaux » (1)) dans ou sur une machine de traitement pour ces objets longitudinaux, ces objets longitudinaux pouvant être introduits le long d'un trajet d'alimentation dans la machine de traitement où ils sont traités, et l'axe longitudinal des objets longitudinaux (1) dans l'état de traitement étant approximativement coaxial avec le trajet d'alimentation, comprenant une commande, présentant un ordinateur et un programme, pour le réglage des paramètres de traitement des éléments de traitement et de tout élément d'alimentation pour la machine de traitement, comprenant une interface d'opérateur et comprenant au moins un capteur (2, 12), lequel, dans l'état de fonctionnement, alimente ou alimentent vers la machine des signaux de mesure pertinents, générés par les objets longitudinaux (1), **caractérisée en ce que**
la commande (17, 9) comprend au moins une mémoire de table dans laquelle, avant le traitement des objets longitudinaux (1), l'ensemble de paramètres appropriés peut être entré par le biais de l'interface d'opérateur pour chacun des objets longitudinaux (1), sachant qu'il est possible d'attribuer le signal de mesure discret appartenant à un certain objet longitudinal (1) ou les signaux de mesure discrets du capteur ou des capteurs (2, 12) à chacun de ces ensembles de paramètres de traitement, lesdits signaux de mesure appartenant à un certain objet longitudinal (1),
**en ce que** la commande (17, 9) est appropriée pour transmettre consécutivement, aux éléments de traitement et d'alimentation, sur la base du signal de mesure existant ou des signaux de mesure existants du capteur ou des capteurs (2, 12) et sur la base de la présence d'un certain objet longitudinal (1) dans la machine de traitement, les paramètres de traitement appropriés pour cet objet longitudinal (1).

2. Machine selon les revendication 1, **caractérisée en ce que** le capteur se présente sous la forme d'un capteur sans contact (2), lequel est de préférence équipé de manière à pouvoir générer, par des signaux d'excitation électriques (électrostatiques, capacitifs ou inductifs), magnétiques ou électromagnétiques, un signal de mesure électrique reproductible spécifique à l'objet longitudinal (12), et à pouvoir émettre ledit signal de mesure en tant que valeur mesurée, sur la base de laquelle le type exact de l'objet longitudinal utilisé dans chaque cas et donc l'ensemble de paramètres de traitement associé peuvent être dérivés automatiquement ou semi-automatiquement, le capteur sans contact (2) se présentant facultativement sous la forme d'un capteur annulaire inductif.

3. Machine selon la revendication 1 ou 2, **caractérisée en ce que** le capteur ou un deuxième capteur se présente sous la forme d'un capteur de diamètre de préférence tactile ou optique (12) et émet un signal de mesure électrique reproductible spécifique à l'objet longitudinal (1) en tant que valeur pour le diamètre extérieur, sur la base duquel le type exact de l'objet longitudinal utilisé dans chaque cas et donc l'ensemble de paramètres de traitement associé peuvent être dérivés automatiquement ou semi-automatiquement.

4. Machine selon l'une quelconque des revendications précédentes, **caractérisée en ce que** tous les éléments de traitement et la commande sont équipés de manière à pouvoir traiter des objets longitudinaux (1) à plusieurs couches, au moins deux couches, et **en ce que** le capteur (2) est équipé de telle façon que, dans le cas des objets (1) mentionnés ainsi que dans le cas de fils ou de profilés non isolés ou non revêtus, il peut mesurer la section transversale du conducteur métallique ou du moins émettre un signal sur la base duquel la commande peut dériver la section transversale réelle du conducteur.

5. Machine selon l'une quelconque des revendications précédentes, **caractérisée en ce que** l'un des capteurs (2 ou 12) comprend un système optique d'imagerie optoélectronique capable d'enregistrer des informations, telles que des couleurs, des codes ou des données, appliqués sur la surface d'un objet longitudinal, et transmet des signaux correspondants à la commande (17, 9) dans le but d'attribuer l'objet longitudinal à un certain ensemble de paramètres de traitement.

6. Machine selon l'une quelconque des revendications précédentes, **caractérisée en ce que** la mémoire de table ou la commande et l'ordinateur sont intégrés dans la machine de traitement, dans un ordinateur externe coordonné avec la machine de traitement, ou dans un réseau auquel appartient la machine de traitement, la machine de traitement et/ou la mémoire de table comprenant facultativement une bibliothèque pré-générée dans laquelle certains ensembles de paramètres de traitement appartenant à certains types d'objets longitudinaux (1) sont stockés.

7. Machine selon l'une quelconque des revendications précédentes, **caractérisée en ce que** la commande est équipée ou programmée pour comparer le diamètre de conducteur mesuré à l'aide du capteur (12) (« câble » est cité ci-dessous à la place des objets longitudinaux, étant donné que les revendications suivantes portent essentiellement sur ces formes de réalisation utilisées de préférence pour le traitement de câbles) et/ou le signal de mesure mesuré à l'aide du capteur (2) avec les valeurs dans la mémoire de table ou dans la bibliothèque, et pour charger l'ensemble de paramètres de traitement correspondant ou, si cela n'est pas possible sans ambiguïté en raison d'un manque de possibilité de coordination du diamètre de câble extérieur et/ou du signal de mesure du capteur (2), pour indiquer les ensembles de paramètres de traitement appropriés à un opérateur par le biais de l'interface d'opérateur, de manière à ce que l'opérateur puisse faire le choix final (sur la base de caractéristiques externes ou internes connues du câble (1)).

8. Machine selon l'une quelconque des revendications précédentes, **caractérisée en ce qu'**il est prévu au moins deux capteurs (2, 12) identiques ou différents ou plus, lesquels peuvent dans chaque cas générer différents signaux de mesure spécifiques au type de câble, et **en ce que** la commande est équipée ou programmée pour comparer les différents signaux de mesure mesurés spécifiques au type de câble avec les valeurs dans la mémoire de table ou dans la bibliothèque et pour charger l'ensemble de paramètres de traitement correspondant ou, si cela n'est toujours pas possible sans ambiguïté en raison d'un manque de possibilité précise de coordination, pour indiquer les ensembles de paramètres de traitement appropriés à un opérateur par le biais de l'interface d'opérateur de manière à ce que l'opérateur puisse faire le choix final (sur la base de caractéristiques externes ou internes connues du câble (1)).

9. Machine selon l'une quelconque des revendications précédentes, **caractérisée en ce que** l'un des capteurs - facultativement un troisième capteur - est conçu comme un capteur d'épaisseur de paroi mesurant, s'il est actionné, l'épaisseur de paroi de l'isolation de l'objet longitudinal ou du câble (1).

10. Machine selon l'une quelconque des revendications précédentes, **caractérisée en ce que** le capteur de diamètre tactile (12) possède, pour la détermination du diamètre extérieur de l'objet longitudinal ou du câble (1), deux roues ou rouleaux opposés l'un à l'autre par paires, lesquels, dans l'état de mesure, sont pressés sur l'objet longitudinal (1) et mesurent ainsi leur espacement réciproque en tant que mesure du diamètre extérieur d'une façon habituelle (à l'aide d'un potentiomètre, de capteurs Hall, etc.), ou **en ce que** le capteur de diamètre (12) comprend au moins une barrière lumineuse à fourche CCD ou au moins un micromètre laser.

11. Machine selon l'une quelconque des revendications précédentes, **caractérisée en ce que** les plages de tolérance des valeurs mesurées par le capteur peuvent être affichées et réglées afin de décider si un ensemble de paramètres de traitement peut être coordonné sans ambiguïté avec les signaux de mesure ou pas.

12. Machine selon l'une quelconque des revendications précédentes, **caractérisée en ce que** le programme de la commande comprend un mode détectant toute défaillance dans l'alimentation de l'objet (1) par l'un au moins des capteurs afin de stopper la machine de traitement.

13. Machine selon l'une quelconque des revendications précédentes, **caractérisée en ce que** le programme de la commande ou de la mémoire de table et/ou de la bibliothèque et/ou de l'interface d'opérateur est programmée de manière à ce qu'un opérateur puisse attribuer des valeurs de capteur à un objet longitudinal (1) par le biais d'une session guidée par menu en chargeant l'objet longitudinal (1) souhaité dans la machine de traitement afin d'exécuter des mesures d'essai et, si souhaité, en entrant consécutivement les paramètres de traitement requis, y compris des paramètres d'alimentation, en en exécutant des opérations de traitement d'essai.

14. Procédé pour la détection automatique ou automatisée de câbles, de fils et de profilés (ci-après appelés « matériau longitudinal (1) ») dans ou sur des machines de traitement de câbles, comprenant les étapes suivantes :
à l'aide d'au moins un capteur (2, 12), mesure de signaux de mesure pertinents générés par le matériau longitudinal ;
et **caractérisé par** les étapes suivantes :
identification du matériau longitudinal à traiter automatiquement ou semi-automatiquement et de manière fiable sur la base de certaines propriétés ou paramètres mesurés en comparaison avec des paramètres existants dans une machine de traitement ;
détermination des paramètres de traitement coordonnés d'une manière automatique ou automatisée sur la base de l'identification du matériau longitudinal (1) ; et
transmission, à des éléments de traitement et d'alimentation, sur la base du signal de mesure existant ou des signaux de mesure existants du capteur ou des capteurs (2, 12) et sur la base de la présence d'un certain élément longitudinal (1) dans la machine de traitement, des paramètres de traitement appropriés pour cet élément longitudinal (1).

15. Procédé pour la détection automatique ou automatisée d'un matériau longitudinal (1) dans ou sur des machines de traitement de câbles selon la revendication 14, en outre **caractérisé par** l'étape suivants :
délivrance d'autres valeurs mesurées à l'aide d'un deuxième capteur, sur la base desquelles des câbles présentant le même diamètre extérieur mais des structures intérieures différentes peuvent être identifiés de manière fiable.
